# EUROPÄISCHE PATENTANMELDUNG

(11) **EP 2 570 695 A2**
(43) Veröffentlichungstag der Anmeldung: **20.03.2013**
(21) Anmeldenummer: 12183722.3
(22) Anmeldetag: 10.09.2012
(51) Int. Cl.: F16F 7/04

(54) **Rotationsdämpfer mit Freilauf**

(30) Priorität: 16.09.2011 DE 102011113616
(71) Anmelder: Hörauf & Kohler Verwaltungs KG, 86850 Fischach (DE)
(72) Erfinder: Schiele, Günter, 86156 Augsburg (DE); Kohler, Dieter, 86179 Augsburg (DE)
(74) Vertreter: Charrier, Rapp & Liebau

(57) **Zusammenfassung**

Die Erfindung betrifft einen Rotationsdämpfer mit Freilauf, umfassend ein Gehäuse (1) mit einem Gehäuseboden (13) und einem Gehäusedeckel (14), einen im Gehäuse (1) um eine Drehachse (A) drehbar angeordneten Rotor (2), ein im Gehäuse (1) gegenüber dem Rotor (2) verdrehbar angeordnetes Steuerglied (3) und wenigstens ein Bremselement, welches bei einer Drehung des Rotors (2) in einer ersten Rotationsrichtung in Anlage an eine Innenfläche (13a; 14a) des Gehäusebodens (13) oder des Gehäusedeckels (14) kommt um ein auf den Rotor (2) wirkendes Bremsmoment zu erzeugen und bei einer Drehung des Rotors (2) in der entgegengesetzten Rotationsrichtung in eine Freilaufstellung gebracht wird, in der sich der Rotor (2) im Wesentlichen ohne Einwirkung eines Bremsmoments frei drehen kann. Um bei einem solchen Rotationsdämpfer einen sich selbsttätig einstellenden Übergang von der Freilaufstellung in die Reibstellung zu ermöglichen ist vorgesehen, dass an dem Rotor (2) drehfest eine Steuerscheibe (4) angeordnet ist, welche über wenigstens eine schräg zur Drehachse (A) stehende Steuerfläche (6) verfügt, die mit einer korrespondierenden Steuerfläche (7) an dem Steuerglied (3) zusammenwirkt, um das oder jedes Bremselement bei einer Drehung des Rotors (2) in der ersten Rotationsrichtung in axialer Richtung gegen die Innenfläche (13a; 14a) des Gehäusebodens (13) oder des Gehäusedeckels (14) zu pressen, wobei die Steuerflächen (6, 7) parallel zueinander verlaufen und im Wesentlichen über ihre gesamte Fläche gleitend gegeneinander verschoben werden, wenn sich die Drehrichtung des Rotors (2) gegenüber dem Gehäuse (1) ändert.

## Beschreibung

Die Erfindung betrifft einen Rotationsdämpfer mit Freilauf nach dem Oberbegriff des Anspruchs 1.

Aus der DE 10 2006 012 033 A1 sind verschiedene Ausführungsformen von Drehdämpfern mit einem Freilauf bekannt, welche über ein Gehäuse und einen im Gehäuse drehbar angeordneten Rotor mit einer Welle und einem Drehkolben verfügen, wobei bei einer Drehung des Rotors gegenüber dem Gehäuse in einer ersten Rotationsrichtung ein auf den Rotor wirkendes Bremsmoment erzeugt wird und der Drehdämpfer bei einer Drehung des Rotors in der entgegengesetzten Rotationsrichtung in eine Freilaufstellung gebracht wird, in der sich der Rotor im Wesentlichen ohne Einwirkung eines Bremsmoments frei in dem Gehäuse drehen kann. Hierfür ist ein Freilauf-Element vorgesehen, welches in der ersten Rotationsrichtung eine Drehmomentübertragung auf den Drehkolben des Rotors zulässt, wohingegen bei einer Drehung des Rotors in entgegengesetzter Rotationsrichtung keine Drehmomentübertragung erfolgt. In einer Ausführungsvariante umfasst das Freilauf-Element eine Blockier-Einheit mit radial zur Drehachse verlaufenden Blockierstegen, welche an einem Reibscheibe angeformt sind, die sich im Inneren des Gehäuses befindet und gegenüber dem Drehkolben des Rotors drehen kann. Die Blockierstege greifen in korrespondierende Blockiemuten ein, welche im Drehkolben vorgesehen ist. Die Blockiemuten sind - in der ersten Rotationsrichtung gesehen - rampenförmig ansteigend ausgebildet und bilden an den jeweiligen Nut-Enden Anschläge für den in die jeweilige Nut eingreifenden Blockiersteg. Die maximale Tiefe der Blockiemuten entspricht im Wesentlichen der Höhe des jeweils darin eingreifenden Blockierstegs und die minimale Tiefe der Blockiemuten ist so gewählt, dass sie kleiner ist als die Höhe des eingreifenden Blockierstegs. In der Freilaufstellung des Freilauf-Elements liegen die Blockierstege am ersten Nut-Anschlag an, welcher an der tiefsten Stelle der rampenförmigen Nut angeordnet ist. In dieser Freilaufstellung werden die Blockierstege vollständig in der Nut aufgenommen, so dass das Freilauf-Element in in axialer Richtung (also in Richtung der Rotationsachse) eine minimale Erstreckung aufweist. Bei einer Rotation des Rotors gegenüber dem Gehäuse in der ersten Rotationsrichtung werden die Blockierstege entlang der rampenförmig ansteigenden Blockiemut bewegt, bis die Blockierstege an dem gegenüberliegendem Nut-Anschlag anliegen. In dieser Reibstellung weist das Freilauf-Element in axialer Richtung eine maximale Erstreckung auf, da die Blockierstege die minimale Tiefe der Blockiemut überragen. Dadurch wird die Reibscheibe in axialer Richtung gegenüber dem Drehkolben des Rotors verschoben, so dass die Reibscheibe gegen einen Reibungs- und Dämpfungs-Belag gepresst wird, der auf dem Boden des zylindrischen Gehäuses angeordnet ist. Bei einer Drehung des Rotors in der ersten Rotationsrichtung wird auf diese Weise ein Reibmoment zwischen dem feststehenden Reibungs- und Dämpfungs-Belag und der sich drehenden Reibscheibe erzeugt, welches auf die Welle des Rotors übertragen wird und dessen Drehung gegenüber dem Gehäuse dämpft. Wird der Rotor gegenüber dem Gehäuse in entgegengesetzter Richtung gedreht, wird das Freilauf-Element wieder in seine Freilaufstellung gebracht, in der die Blockierstege vollständig in den Blockiernuten aufgenommen werden, so dass die Reibscheibe außer Eingriff mit dem Reibungs- und Dämpfungs-Belag gebracht wird. In der Freilaufstellung wird kein Drehmoment auf den Reibungs- und Dämpfungs-Belag übertragen und infolgedessen kein Reibmoment erzeugt.

Dieser bekannte Drehdämpfer mit Freilauf erweist sich im praktischen Gebrauch als fehleranfällig. Es hat sich insbesondere gezeigt, dass der Übergang des Freilauf-Elements von seiner Freilaufstellung in seine Reibstellung nicht mit der erforderlichen Zuverlässigkeit erfolgt, wenn die Drehrichtung des Rotors gegenüber dem Gehäuse geändert wird.

Hiervon ausgehend liegt der Erfindung die Aufgabe zugrunde, einen gattungsgemäßen Rotationsdämpfer mit Freilauf so weiterzubilden, dass ein möglichst zuverlässiger und sich selbsttätig einstellender Übergang von der Freilaufstellung in die Reibstellung ermöglicht wird, wenn sich die Drehrichtung des Rotors gegenüber dem Gehäuse ändert.

Diese Aufgabe wird mit einem Rotationsdämpfer mit den Merkmalen des Anspruchs 1 gelöst. Bevorzugte Ausführungsformen dieses Rotationsdämpfers sind den abhängigen Ansprüchen zu entnehmen.

Der erfindungsgemäße Rotationsdämpfer umfasst ein Gehäuse, welches zweckmäßig eine zylindrische Gehäusewand und einen bevorzugt einstückig daran angeformten Gehäuseboden sowie einen bevorzugt abnehmbar ausgebildeten Gehäusedeckel aufweist. In dem Gehäuse ist ein Rotor um eine Drehachse drehbar angeordnet. Im Gehäuse ist ferner ein gegenüber dem Rotor verdrehbares Steuerglied und wenigstens ein Bremselement vorgesehen, welches bei einer Drehung des Rotors in einer ersten Rotationsrichtung in Anlage an eine Innenfläche des Gehäusebodens oder des Gehäusedeckels kommt, um ein auf den Rotor wirkendes Bremsmoment zu erzeugen. Bei einer Drehung des Rotors in der entgegengesetzten Rotationsrichtung wird der Rotationsdämpfer in eine Freilaufstellung gebracht, in der sich der Rotor im Wesentlichen ohne Einwirkung eines Bremsmoments frei drehen kann.

Erfindungsgemäß ist vorgesehen, dass an dem Rotor drehfest eine Steuerscheibe angeordnet ist, welche über wenigstens eine schräg zur Drehachse stehende Steuerfläche verfügt. An dem Steuerglied ist eine dazu korrespondierende und zweckmäßig komplementär geformte Steuerfläche vorgesehen, die mit der Steuerfläche der Steuerscheibe so zusammenwirkt, dass bei einer Drehung des Rotors in der ersten Rotationsrichtung wenigsten ein Bremselement, welches zweckmäßig am Steuerglied und/oder an der Steuerscheibe angeordnet ist, in axialer Richtung gegen die Innenfläche des Gehäusebodens oder des Gehäusedeckels gepresst wird. Erfindungsgemäß sind die zusammenwirkenden Steuerflächen an der Steuerscheibe und am Steuerglied parallel zueinander verlaufend angeordnet und können - zumindest im Wesentlichen - über ihre gesamte Fläche gleitend gegeneinander verschoben werden, wenn sich die Drehrichtung des Rotors gegenüber dem Gehäuse ändert. Dadurch wird gewährleistet, dass sich bei einer Drehung des Rotors in der ersten Rotationsrichtung das Steuerglied und die Steuerscheibe in axialer Richtung durch gleitendes Verschieben entlang der Steuerflächen voneinander entfernen, wodurch das oder jedes Bremselement in axialer Richtung gegen die Innenfläche des Gehäusebodens bzw. des Gehäusedeckels gepresst wird, um in dieser Reibstellung ein Bremsmoment zu erzeugen, welches auf den Rotor übertragen wird. Bei einer Drehung des Rotors in der entgegengesetzten Rotationsrichtung nähern sich das Steuerglied und die Steuerscheibe dagegen in axialer Richtung durch gleitendes Verschieben entlang der Steuerflächen aneinander an, wodurch das oder jedes Bremselement außer Eingriff mit dem Gehäuseboden bzw. dem Gehäusedeckel gebracht wird, um den Rotationsdämpfer bei einer Änderung der Drehrichtung des Rotors gegenüber dem Gehäuse in seine Freilaufstellung zu bringen. Auf diese Weise wird bei einer Änderung der Drehrichtung des Rotors gewährleistet, dass der Rotationsdämpfer selbsttätig von seiner Dämpfungsstellung in seine Freilaufstellung gebracht wird, und umgekehrt. Durch die großflächige Ausbildung der Steuerflächen an der Steuerscheibe und an dem Steuerglied, welche parallel zueinander angeordnet sind und über ihre im Wesentlichen gesamte Fläche gleitend gegeneinander verschiebbar sind, wird ein zuverlässiges Umstellen von der Freilaufstellung in die Reibstellung, und umgekehrt, gewährleistet.

Der erfindungsgemäße Rotationsdämpfer weist zweckmäßig ein erstes Bremselement auf, welches durch einen Bremsbelag gebildet ist, der an der Unterseite der Steuerscheibe angeordnet und insbesondere befestigt ist, wobei die Unterseite der Steuerscheibe dem Gehäuseboden zugewandt ist. In einem bevorzugten oder einem alternativen Ausführungsbeispiel kann zusätzlich oder statt des ersten Bremselements ein zweites Bremselement vorgesehen sein, welches durch einen Bremsbelag gebildet ist, der an der Oberseite des Steuerglieds angeordnet bzw. befestigt ist, wobei die Oberseite des Steuerglieds dem Gehäusedeckel zugewandt ist.

In einem bevorzugten Ausführungsbeispiel ist in dem Steuerglied wenigstens ein Langloch vorgesehen, in welches ein an der Steuerscheibe angeordneter Zapfen eingreift und dort zwischen einer ersten Grenzstellung und einer zweiten Grenzstellung verschiebbar ist. Bei diesem Ausführungsbeispiel ist das Steuerglied im Wesentlichen scheibenförmig ausgebildet und liegt auf der ebenfalls im Wesentlichen scheibenförmig ausgebildeten Steuerscheibe auf. Bei einer Drehung des Rotors in der ersten Rotationsrichtung bewegt sich der Zapfen in seine erste Grenzstellung, in welcher das Steuerglied gegenüber der Steuerscheibe in axialer Richtung abgehoben ist, um den Rotationsdämpfer in seine Reibstellung zu bringen. Bei einer Drehung des Rotors in der entgegengesetzten Rotationsrichtung bewegt sich der Zapfen in seine zweite Grenzstellung, in der das Steuerglied (flächig) auf der Steuerscheibe aufliegt, so dass das Steuerglied und die Steuerscheibe in axialer Richtung eine minimale Höhe aufweisen, wodurch das oder jedes Bremselement außer Eingriff mit der Innenfläche des Gehäusebodens bzw. des Gehäusedeckels gebracht wird, um den Rotationsdämpfer in seine Freilaufstellung zu bringen.

In einem zweiten Ausführungsbeispiel des erfindungsgemäßen Rotationsdämpfers sind die korrespondierenden Steuerflächen an dem Steuerglied und an der Steuerscheibe durch zueinander korrespondierende und ineinandergreifende Gewindeflanken gebildet. Dazu ist zweckmäßig der Außenumfang der Steuerscheibe als Außengewinde, insbesondere als mehrgängiges Steilgewinde, ausgebildet und das Steuerglied ist als ringförmige Hülse ausgebildet, welche die Steuerscheibe umgreift und ein zum Außengewinde der Steuerscheibe korrespondierendes Innengewinde aufweist. Bei diesem Ausführungsbeispiel ist das Steuerglied zweckmäßig im Gehäuse in axialer Richtung über Lagerelemente fixiert, jedoch gegenüber dem Gehäuse drehbar gelagert. Die Lagerelemente weisen zweckmäßig einen am Außenumfang des hülsenförmigen Steuerglieds umlaufenden Steg auf, der in eine am Innenumfang des Gehäuses umlaufende Ringnut eingreift.

Diese und weitere Merkmale des erfindungsgemäßen Rotationsdämpfers sowie sich daraus ergebende Vorteile der Erfindung gehen aus den nachfolgend unter Bezugnahme auf die begleitenden Zeichnungen näher beschriebenen Ausführungsbeispielen hervor. Die Zeichnungen zeigen:

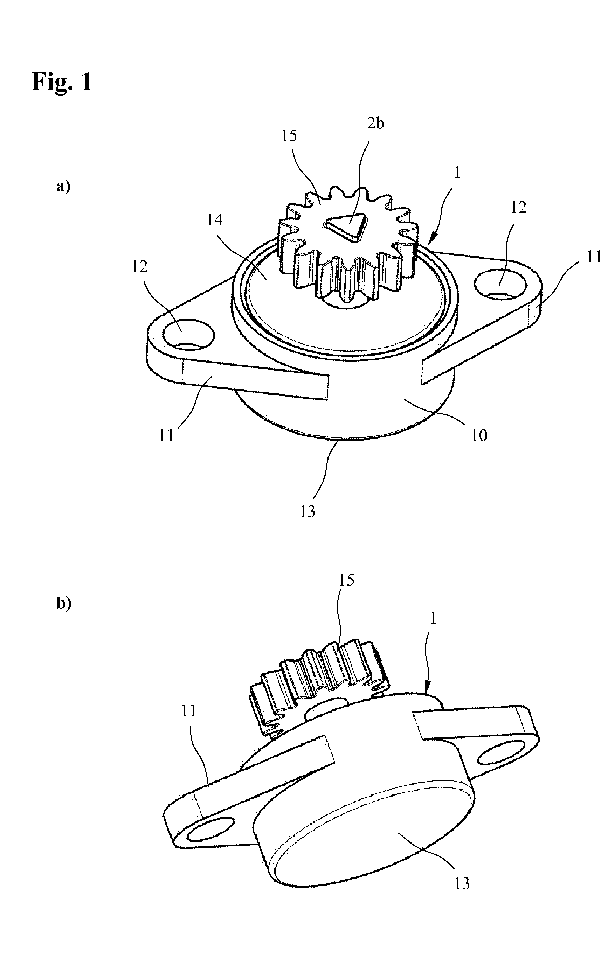

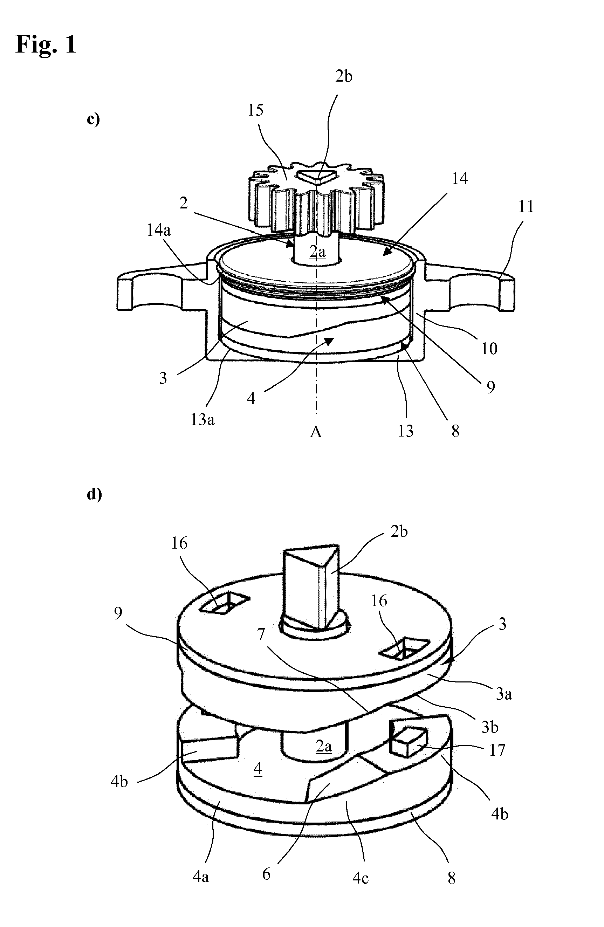

- **Figur 1:**: Perspektivische Darstellung eines ersten Ausführungsbeispiels des erfindungsgemäßen Rotationsdämpfers, wobei Figur 1a den Rotationsdämpfer in einer ersten perspektivischen Ansicht zeigt, Figur 1b den Rotationsdämpfer in einer zweiten perspektivischen Ansicht zeigt, Figur 1c den Rotationsdämpfer in einer Seitenansicht mit im Aufriss dargestelltem Gehäuse und Figur 1d den Rotor mit der daran angeordneten Steuerscheibe sowie das Steuerglied zeigt;

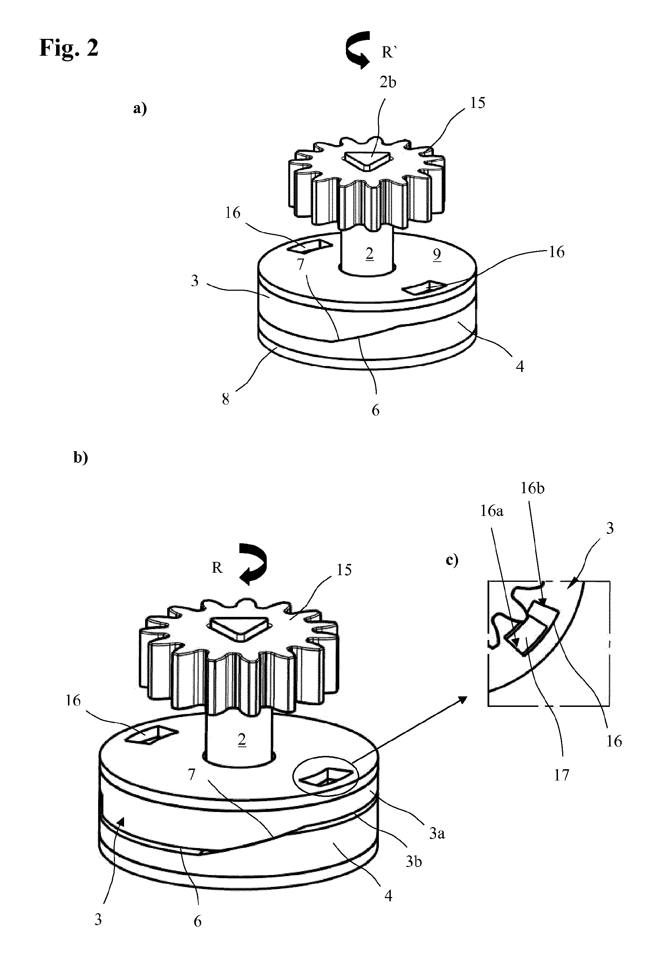

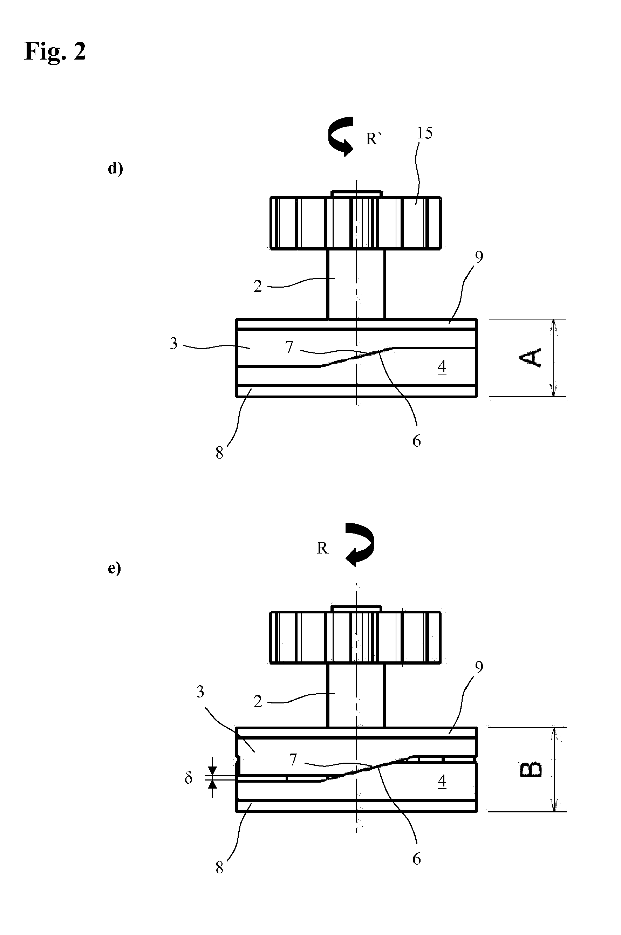

- **Figur 2:**: Darstellung des Rotors und der daran angeordneten Steuerscheibe sowie des Steuerglieds des Rotationsdämpfers von Figur 1 in seiner Freilaufstellung (Figur 2a) und in seiner Reibstellung (Figur 2b) sowie ein vergrößerter Ausschnitt aus Figur 2b (Figur 2c); In Figur 2d ist der Rotor mit der daran angeordneten Steuerscheibe sowie dem Steuerglied des Rotationsdämpfers von Figur 1 in einer Seitenansicht in seiner Freilaufstellung und in Figur 2e in seiner Reibstellung gezeigt;

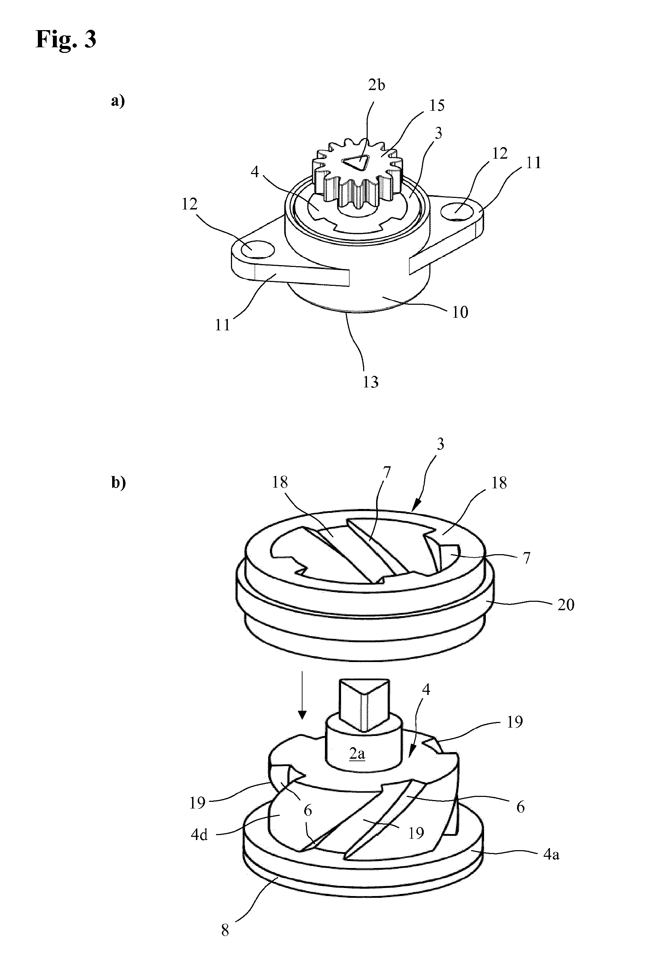

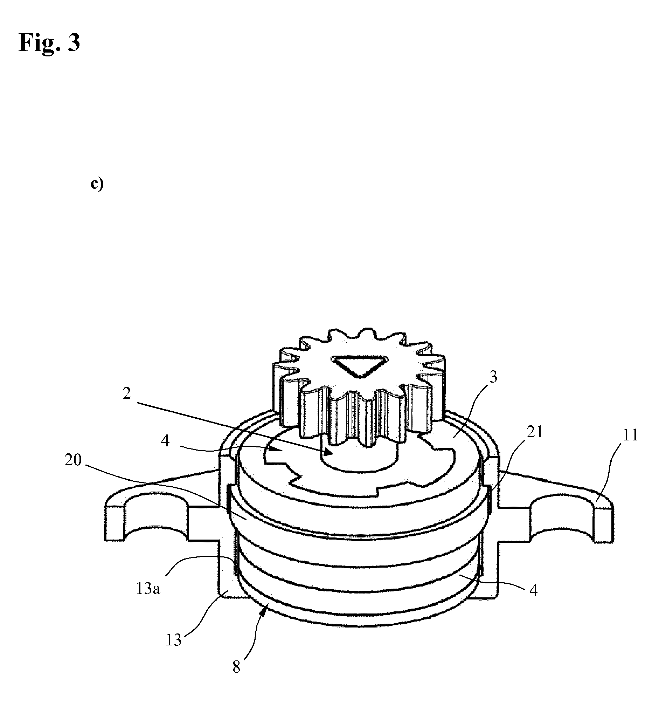

- **Figur 3:**: perspektivische Darstellung eines zweiten Ausführungsbeispiels des erfindungsgemäßen Rotationsdämpfers, wobei Figur 3a den Rotationsdämpfer in einer ersten perspektivischen Ansicht zeigt und Figur 3b den Rotor mit der daran angeordneten Steuerscheibe und das Steuerglied in einer Explosionsdarstellung zeigt und in Figur 3c der Rotationsdämpfer in einer Seitenansicht mit im Aufriss dargestelltem Gehäuse gezeigt ist;

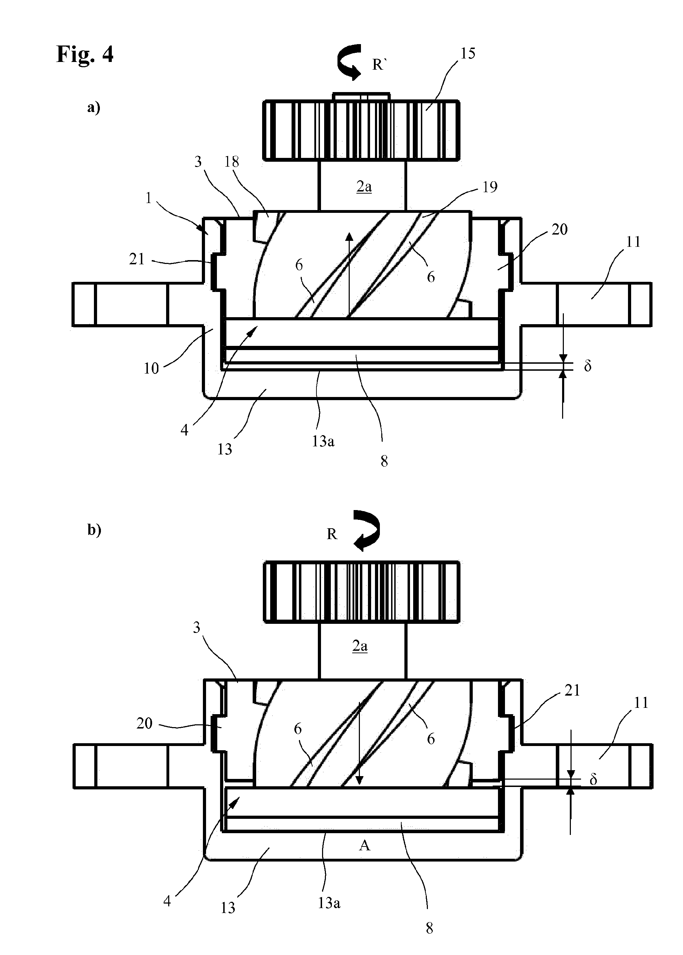

- **Figur 4:**: Seitenansicht des Rotationsdämpfers von Figur 3 mit im Aufriß dargestelltem Gehäuse in seiner Freilaufstellung (Figur 4a) und seiner Reibstellung (Figur 4b).

Das in Figur 1 gezeigte erste Ausführungsbeispiel des erfindungsgemäßen Rotationsdämpfers weist ein Gehäuse 1 mit einer im Wesentlichen hohlzylindrisch ausgebildeten Gehäusewand 10 auf. An der Außenseite der Gehäusewand 10 sind zweckmäßig einstückig Befestigungslaschen 11 mit Befestigungsbohrungen 12 angeformt. Über diese Befestigungslaschen 11 ist das Gehäuse 1 an einem feststehenden Teil befestigbar, beispielsweise an einer Innenfläche eines Handschuhkastens eines Fahrzeugs. Das Gehäuse 1 weist einen Gehäuseboden 13 auf, der zweckmäßig einstückig mit der zylindrischen Gehäusewand 10 ausgebildet ist. An der dem Gehäuseboden 13 gegenüberliegenden Oberseite ist das Gehäuse 1 durch einen zweckmäßig abnehmbaren Deckel 14 verschlossen. Sowohl das Gehäuse 1 als auch der Deckel 14 können in einem Kunststoffspritzgussverfahren hergestellt werden.

Im Inneren des Gehäuses 1 ist ein Rotor 2 drehbar angeordnet. Der Rotor 2 umfasst eine zylindrische Welle 2a, an der im unteren Bereich eine Steuerscheibe 4 angeordnet bzw. angeformt ist. Zweckmäßig ist die Welle 2a mit der Steuerscheibe 4 einstückig als Kunststoffspritzgussteil ausgebildet. An der Oberseite der zylindrischen Welle 2a ist ein im Querschnitt dreiecksförmiger Anschlussbereich 2b vorgesehen. Die Oberseite der Welle 2a und der Anschlussbereich 2b ragen durch eine Öffnung im Gehäusedeckel 14 aus dem Gehäuse 1 heraus. Am Anschlussbereich 2b des Rotors 2 ist ein Zahnrad 15 angeordnet (Figur 1a). Dieses Zahnrad 15 kann an eine hier zeichnerisch nicht dargestellte Zahnstange, welche mit dem in seiner Bewegung zu dämpfenden Teil verbunden ist, gekoppelt werden. Bei dem in seiner Bewegung zu dämpfenden Teil kann es sich beispielsweise um den Deckel eines Handschuhkastens eines Fahrzeugs handeln. Der Rotor 2 mit der zylindrischen Welle 2a, dem Anschlussbereich 2b und der Steuerscheibe 4 ist zweckmäßig einstückig als Kunststoffspritzgussteil ausgebildet.

Im Inneren des Gehäuses 1 ist neben dem Rotor 2 mit der daran angeordneten Steuerscheibe 4 ein Steuerglied 3 drehbar gelagert. Das Steuerglied 3 ist im Wesentlichen scheibenförmig ausgebildet und liegt auf der ebenfalls im Wesentlichen scheibenförmigen Steuerscheibe 4 auf. Das Steuerglied enthält eine zentrale Axialbohrung, durch welche die Welle 2a des Rotors geführt ist. Das Steuerglied 3 ist gegenüber dem Rotor und der Steuerscheibe 4 drehbar. An seiner Oberseite, welche dem Gehäusedeckel 14 zugewandt ist, ist ein scheibenförmig ausgebildeter Bremsbelag befestigt. Der Bremsbelag 8 ist zweckmäßig aus einem Weichkunststoff gebildet, wie zum Beispiel Polyester-Urethan-Kautschuk, Silikonkautschuk oder Chloropren-Kautschuk (Polychloropren oder Chloropren oder Chlorbutadien-Kautschuk).

An der Unterseite der Steuerscheibe 4, welche dem Gehäuseboden 13 zugewandt ist, ist in entsprechender Weise ein Bremsbelag 9 vorgesehen, der ebenfalls aus einem Weichkunststoff gebildet und an der Unterseite der Steuerscheibe 4 befestigt ist. Die Bremsbeläge 8 und 9 bilden ein erstes Bremselement am Steuerglied 3 und ein zweites Bremselement an der Steuerscheibe 4.

Wie insbesondere aus Figur 1d ersichtlich, umfasst die Steuerscheibe 4 einen kreisscheibenförmigen Grundkörper 4a und einen sich in axialer Richtung nach oben ersteckenden Steg 4b. Der Steg 4b weist einen rampenförmig ansteigenden Abschnitt 4c auf, wobei die Oberseite dieses rampenförmigen Abschnitts 4c eine schräg zur Drehachse 4 stehende Steuerfläche 6 bildet. An der ebenen Oberseite jedes Stegs 4b ist ein überstehender Zapfen 17 angeformt. Auf dem kreisscheibenförmigen Grundkörper 4a der Steuerscheibe 4 sind zwei solcher Stege 4b an diametral gegenüberliegenden Stellen angeordnet.

Das Steuerglied 3 weist ebenfalls einen kreisscheibenförmigen Grundkörper 3a auf, in dem eine Nut 3b ausgeformt ist. Die Nut 3b weist einen ebenen Abschnitt und einen rampenförmig ansteigenden Abschnitt auf, wobei der rampenförmig ansteigende Abschnitt eine schräg zur Drehachse A stehende Steuerfläche 7 bildet, welche zur Steuerfläche 6 der Steuerscheibe 4 korrespondiert und parallel zu dieser Steuerfläche 6 verläuft. Das Steuerglied 3 weist zwei derartige Nuten 3b an diametral gegenüberliegenden Stellen auf, so dass jeder Steuerfläche 6 der Steuerscheibe 4 eine korrespondierende Steuerfläche 7 am Steuerglied 3 zugeordnet ist.

Das Steuerglied 3 und der auf seiner Oberseite befestigte Bremsbelag 8 weisen zwei an diametral gegenüberliegenden Stellen angeordnete Langlöcher 16 auf, deren stirnseitige Enden eine erste Anschlagfläche 16a und eine zweite Anschlagfläche 16b bilden (Figur 2c). Diese Länglöcher 16 wirken mit dem Zapfen 17 an der Oberseite der Steuerscheibe 4 in der Weise zusammen, dass ein Zapfen 17 in ein korrespondierendes Langloch 16 eingreift. Bei einer Drehung des Rotors 2 und der daran angeordneten Steuerscheibe 4 bewegt sich der Zapfen 17 in dem Langloch 16 zwischen einer ersten Grenzstellung, in der er an der ersten Anschlagfläche 16a anliegt, und einer zweiten Grenzstellung, in der er an der zweiten Anschlagfläche 16b anliegt.

Die Funktionsweise dieses Ausführungsbeispiels des erfindungsgemäßen Rotationsdämpfers geht aus Figur 2 hervor, wobei die Figuren 2a und 2d den Rotationsdämpfer in seiner Freilaufstellung und die Figuren 2b und 2e in seiner Reibstellung zeigen.

Wird der Rotor 2 wie in Figur 2b dargestellt in der ersten Rotationsrichtung R gegenüber dem Gehäuse 1 gedreht (welche in Figur 2b mit dem Pfeil R gekennzeichnet ist), entfernt sich das Steuerglied 3 von der Steuerscheibe 4 in axialer Richtung nach oben, indem die Steuerfläche 7 des Steuerglieds gleitend auf der korrespondierenden Steuerfläche 6 der Steuerscheibe 4 verschoben wird. Aufgrund der Stellung der im Wesentlichen parallel zueinander verlaufenden Steuerflächen 6 und 7 schräg zur Drehachse A, hebt sich das Steuerglied 3 in axialer Richtung um eine Strecke δ von der Steuerscheibe 4 ab, so dass das Steuerglied 3 und die Steuerscheibe 4 in axialer Richtung eine maximale Höhe B einnehmen (Figur 2b und Figur 2e). Aufgrund der Vergrößerung der Höhe des Steuerglieds 3 und der Steuerscheibe 4 werden die Bremsbeläge 8 und 9 gegen die Innenfläche 13a des Gehäusebodens 13 bzw. die Innenfläche 14a des Gehäusedeckels 14 gepresst. Dadurch entsteht eine Reibkraft, welches ein Bremsmoment erzeugt, das auf den Rotor 2 einwirkt und dessen Drehung gegenüber dem Gehäuse 1 bremst. In dieser Reibstellung des Rotationsdämpfers befinden sich die Zapfen 17 der Steuerscheibe 4 in ihrer ersten Grenzstellung, die in Figur 2c gezeigt ist. In dieser ersten Grenzstellung befinden sich die Zapfen 17 an der in Richtung der ersten Rotationsrichtung R gesehen hinteren Anschlagfläche 16a des Langlochs 16. Durch den Anschlag des Zapfens 17 an der Anschlagfläche 16a wird eine weitere Verschiebung des Steuerglieds 3 gegenüber der Steuerscheibe 4 in axialer Richtung und damit der Anpressdruck der Bremsbeläge 8, 9 auf die Innenflächen 13a, 14a des Gehäusebodens 13 bzw. des Gehäusedeckels 14 begrenzt. Der Rotor 2 kann daher gegenüber dem Gehäuse 1 gegen die Wirkung der Reibkraft gedreht werden.

Bei einer Drehung des Rotors 2 gegenüber dem Gehäuse 1 in der entgegengesetzten Rotationsrichtung, welche in Figur 2a mit dem Pfeil R' gekennzeichnet ist, wird der Rotationsdämpfer selbsttätig in seine Freilaufstellung gebracht (Figuren 2a und 2d). In dieser Freilaufstellung liegt das Steuerglied 3 auf der Steuerscheibe 4 auf, wobei jeder Steg 4b der Steuerscheibe 4 in eine korrespondierende Nut 3b am Steuerglied 3 formschlüssig eingreift. Dadurch nehmen das Steuerglied 3 und die Steuerscheibe 4 in axialer Richtung eine minimale Höhe A ein (Figur 2d). In dieser Freilaufstellung befinden sich liegen die Zapfen 17 der Steuerscheibe 4 in ihrer zweiten Grenzstellung, in der sie in ihrem jeweils zugeordneten Langloch 16 an der in der ersten Rotationsrichtung gesehen vorderen Anschlagfläche 16b anliegen. In der Freilaufstellung des Rotationsdämpfers stehen die Bremsbeläge 8 und 9 außer Eingriff mit den Innenflächen 13a bzw. 14a des Gehäusebodens 13 bzw. des Gehäusedeckels 14. Es wird daher kein Reibmoment erzeugt und der Rotor 2 kann im Wesentlichen ungebremst gegenüber dem Gehäuse 1 gedreht werden.

In den Figuren 2d und 2e sind der Rotor 2 mit der Steuerscheibe 4 und das Steuerglied 3 in einer Seitenansicht in den beiden Funktionsstellungen, nämlich der Freilaufstellung (Figur 2d) und der Reibstellung (Figur 2e) gezeigt. Aus einem Vergleich dieser beiden Funktionsstellungen des ersten Ausführungsbeispiels des erfindungsgemäßen Rotationsdämpfers ist die Änderung in der Höhe der Steuerscheibe 4 und des Steuerglieds 3 in axialer Richtung ersichtlich. In der Freilaufstellung (Figur 2d), in der das Steuerglied 3 auf der Steuerscheibe 4 aufliegt, beträgt die Höhe A, wohingegen sich die Höhe in der Reibstellung (Figur 2e) um einen Wert δ auf die Höhe B erhöht, wenn der Rotor 2 gegenüber dem Gehäuse 1 in der ersten Rotationsrichtung gedreht wird.

Ein zweites Ausführungsbeispiel eines erfindungsgemäßen Rotationsdämpfers ist in den Figuren 3 und 4 dargestellt. Dieses Ausführungsbeispiel unterscheidet sich von dem ersten Ausführungsbeispiel im Wesentlichen durch die Ausbildung der Steuerscheibe 4 und des Steuerglieds 3. Sich funktionell entsprechende Teile sind bei dem Ausführungsbeispiel der Figuren 3 und 4 mit denselben Bezugszeichen versehen wie in dem Ausführungsbeispiel der Figuren 1 und 2.

Wie bei dem Ausführungsbeispiel der Figuren 1 und 2 umfasst auch der Rotationsdämpfer des zweiten Ausführungsbeispiels ein Gehäuse 1 mit einer im Wesentlichen hohlzylindrisch ausgebildeten Gehäusewand 10 mit daran zweckmäßig einstückig angeordneten Befestigungslaschen 11 mit Befestigungsbohrungen 12. Das Gehäuse weist wiederum einen zweckmäßig einstückig mit der Gehäusewand 10 ausgebildeten Gehäuseboden 13 sowie einen bevorzugt abnehmbar ausgebildeten Gehäusedeckel 14 auf. Der in Inneren des Gehäuses 1 drehbar angeordnete Rotor 2 umfasst eine zylindrische Welle 2a mit einem Anschlussbereich 2b an seiner Oberseite, an dem ein Zahnrad 15 befestigt ist. An der Unterseite der zylindrischen Welle 2a ist eine Steuerscheibe 4 angeordnet. Die Steuerscheibe 4 umfasst einen kreisscheibeförmigen Grundkörper 4a, auf dem ein zylindrischer Fortsatz 4d angeordnet ist, der sich in axialer Richtung erstreckt. Die Welle 2a und die Steuerscheibe 4 mit dem Grundkörper 4a und dem Fortsatz 4d sind zweckmäßig einstückig als Kunststoffspritzgussteil ausgebildet. Der Fortsatz 4d weist einen gegenüber dem Grundkörper 4a kleineren Durchmesser auf. Am Außenumfang des Fortsatzes 4d ist ein Außengewinde mit wenigstens einem Gewindegang 19 vorgesehen. Bevorzugt handelt es sich bei dem Außengewinde - wie in Figur 3d dargestellt - um ein mehrgängiges Steilgewinde mit mehreren Gewindeflanken 19. Die Gewindeflanken 19 bilden dabei Steuerflächen 6, welche schräg zur Drehachse A verlaufen.

Das Steuerglied 3 ist als ringförmige Hülse ausgebildet und umgreift den Fortsatz 4d der Steuerscheibe 4. Die Höhe (also die Ausdehnung in axialer Richtung) des Steuerglieds 3 ist zweckmäßig der Höhe des Fortsatzes 4d der Steuerscheibe 4 angepasst. Am Innenumfang des ringförmigen Steuerglieds 3 ist ein zu dem Außengewinde am Fortsatz 4d der Steuerscheibe 4 korrespondierendes Innengewinde mit Gewindeflanken 18 vorgesehen. Zweckmäßig ist auch das Innengewinde als mehrgängiges Steilgewinde ausgebildet. Die Gewindeflanken 18 des Innengewindes am Steuerglied 3 bilden Steuerflächen 7, welche - wie die Steuerflächen 6 der Steuerscheibe 4 - schräg zur Drehachse A stehen. Die Steuerflächen 7, welche durch die Gewindeflanken 18 des Innengewindes gebildet werden, verlaufen dabei parallel zu den Steuerflächen 6, welche durch die Gewindeflanken 19 des Außengewindes am Fortsatz 4d der Steuerscheibe 4 gebildet werden. Die Gewindeflanken 18 des Innengewindes am Steuerglied 3 greifen in die korrespondierenden Gewindeflanken 19 des Außengewindes der Steuerscheibe 4 ein, so dass das Steuerglied 3 über den so ausgebildeten Gewindeeingriff gegenüber der Steuerscheibe 4 verdrehbar ist. Bei einer Verdrehung des Steuerglieds 3 gegenüber der Steuerscheibe 4 hebt sich bzw. senkt sich das Steuerglied 3 in axialer Richtung gegenüber der Steuerscheibe 4, je nach Drehrichtung.

Am Außenumfang des hülsenförmigen Steuerglieds 3 ist ein umlaufender Steg 20 angeordnet. Dieser Steg 20 bildet zusammen mit einer am Innenumfang des Gehäuses 1 umlaufenden Ringnut 21 ein Lagerelement für das Steuerglied 3. Der Steg 20 greift hierbei in die Ringnut 21 am Innenumfang des Gehäuses 1 ein und bildet eine Lagerung für das Steuerglied 3 im Gehäuse 1, welche die axiale Position des Steuerglieds 3 gegenüber dem Gehäuse 1 fixiert, jedoch eine Drehung des Steuerglieds 3 gegenüber dem Gehäuse 1 zulässt.

Die Funktionsweise dieses zweiten Ausführungsbeispiels des erfindungsgemäßen Rotationsdämpfers geht aus den Figuren 4a und 4b hervor, wobei Figur 4a den Rotationsdämpfer in seiner Freilaufstellung und Figur 4b den Rotationsdämpfer in seiner Dämpfungsstellung zeigt.

Bei einer Drehung des Rotors 2 mit der daran angeformten Steuerscheibe 4 gegenüber dem Gehäuse 1 in einer ersten Rotationsrichtung, welche in Figur 4b mit dem Pfeil R gekennzeichnet ist, wird das Steuerglied 3 gegenüber der Steuerscheibe 4 verdreht und die Steuerscheibe wird - aufgrund der Gewindekopplung zwischen dem Steuerglied 3 und der Steuerscheibe 4 - um eine Höhe δ in axialer Richtung gegenüber dem Steuerglied 3 abgesenkt. Da das Steuerglied 3 in seiner axialen Position im Gehäuse 1 durch die Lagerelemente 20, 21 fixiert ist, bewegt sich die Steuerscheibe 4 dabei in axialer Richtung nach unten, also auf den Gehäuseboden 13 zu. An der Unterseite der Steuerscheibe 4 ist - wie bei dem ersten Ausführungsbeispiel - ein Bremsbelag 8 aus einem Weichkunststoff befestigt. Durch die Bewegung der Steuerscheibe 4 in axialer Richtung in Richtung des Gehäusebodens 13 wird dieser Bremsbelag 8 gegen die Innenfläche 13a des Gehäusebodens 13 gepresst, wodurch eine Reibkraft entsteht, welche auf den Rotor 2 übertragen wird und dessen Drehbewegung gegenüber dem Gehäuse 1 bremst.

Bei einer Drehung des Rotors 2 in entgegengesetzter Rotationsrichtung, welche in Figur 4a mit dem Pfeil R' gekennzeichnet ist, nähert sich die Steuerscheibe 4 aufgrund der Gewindekopplung dem Steuerglied 3 an, bis die Unterseite des Steuerglieds 3 an der Oberseite des Grundkörpers 4a der Steuerscheibe 4 anliegt, wie in Figur 4a dargestellt. Durch die Annäherung der Steuerscheibe 4 an das Steuerglied 3 in axialer Richtung und aufgrund der axialen Fixierung des Steuerglieds 3 gegenüber dem Gehäuse 1 wird dabei die Steuerscheibe 4 um eine Höhe δ von der Innenfläche 13a des Gehäusebodens 13 abgehoben. Dadurch hat der Bremsbelag 8 an der Unterseite der Steuerscheibe 4 keinen Kontakt mehr zur Innenfläche 13a des Gehäusebodens 13 und es wird keine Reibkraft erzeugt. Der Rotor 2 kann sich daher im Wesentlichen ohne Einwirkung einer Reibkraft frei gegenüber dem Gehäuse 1 drehen.

Wie das zweite Ausführungsbeispiel der Erfindung zeigt, müssen die Steuerflächen 6 und 7 nicht als ebene Flächen (wie dies beim ersten Ausführungsbeispiel der Fall ist) ausgebildet sein, sondern es kann sich auch um gekrümmte Flächen (wie dies bei den durch die Gewindeflanken 18, 19 gebildeten Steuerflächen 6 und 7 der Fall ist) handeln. Die Steuerflächen 6 und 7 sind für die Funktion des erfindungsgemäßen Rotationsdämpfers zweckmäßig parallel zueinander verlaufend angeordnet, wobei parallel verlaufend bei gekrümmten Steuerflächen 6, 7 bedeutet, dass die kürzesten Abstände der sich gegenüberliegenden Steuerflächen 6 und 7 über die gesamte Fläche konstant sind.

## Patentansprüche

1. Rotationsdämpfer mit Freilauf, umfassend ein Gehäuse (1) mit einem Gehäuseboden (13) und einem Gehäusedeckel (14), einen im Gehäuse (1) um eine Drehachse (A) drehbar angeordneten Rotor (2), ein im Gehäuse (1) gegenüber dem Rotor (2) verdrehbar angeordnetes Steuerglied (3) und wenigstens ein Bremselement, welches bei einer Drehung des Rotors (2) in einer ersten Rotationsrichtung in Anlage an eine Innenfläche (13a; 14a) des Gehäusebodens (13) oder des Gehäusedeckels (14) kommt um ein auf den Rotor (2) wirkendes Bremsmoment zu erzeugen und bei einer Drehung des Rotors (2) in der entgegengesetzten Rotationsrichtung in eine Freilaufstellung gebracht wird, in der sich der Rotor (2) im Wesentlichen ohne Einwirkung eines Bremsmoments frei drehen kann, **dadurch gekennzeichnet, dass** an dem Rotor (2) drehfest eine Steuerscheibe (4) angeordnet ist, welche über wenigstens eine schräg zur Drehachse (A) stehende Steuerfläche (6) verfügt, die mit einer korrespondierenden Steuerfläche (7) an dem Steuerglied (3) zusammenwirkt, um das oder jedes Bremselement bei einer Drehung des Rotors (2) in der ersten Rotationsrichtung in axialer Richtung gegen die Innenfläche (13a; 14a) des Gehäusebodens (13) oder des Gehäusedeckels (14) zu pressen, wobei die Steuerflächen (6, 7) parallel zueinander verlaufen und im Wesentlichen über ihre gesamte Fläche gleitend gegeneinander verschoben werden, wenn sich die Drehrichtung des Rotors (2) gegenüber dem Gehäuse (1) ändert.

2. Rotationsdämpfer nach Anspruch 1, **dadurch gekennzeichnet, dass** ein erstes Bremselement durch einen Bremsbelag (8) gebildet ist, welcher an der dem Gehäuseboden (13) zugewandten Unterseite der Steuerscheibe (4) befestigt ist.

3. Rotationsdämpfer nach Anspruch 1 oder 2, **dadurch gekennzeichnet, dass** ein zweites Bremselement durch einen Bremsbelag (9) gebildet ist, welcher an der dem Gehäusedeckel (14) zugewandten Oberseite des Steuerglieds (3) befestigt ist.

4. Rotationsdämpfer nach einem der voranstehenden Ansprüche, **dadurch gekennzeichnet, dass** in dem Steuerglied (3) wenigstens ein Langloch (16) vorgesehen ist, in welches ein an der Steuerscheibe angeordneter Zapfen (17) eingreift und dort zwischen einer ersten Grenzstellung und einer zweiten Grenzstellung verschiebbar ist.

5. Rotationsdämpfer nach Anspruch 4, **dadurch gekennzeichnet, dass** sich der Zapfen (17) bei einer Drehung des Rotors (2) in der ersten Rotationsrichtung in seine erste Grenzstellung bewegt, in der das Steuerglied (3) gegenüber der Steuerscheibe (4) in axialer Richtung abgehoben ist.

6. Rotationsdämpfer nach Anspruch 4 oder 5, **dadurch gekennzeichnet, dass** sich der Zapfen (17) bei einer Drehung des Rotors (2) in der entgegengesetzten Rotationsrichtung in seine zweite Grenzstellung bewegt, in der das Steuerglied (3) auf der Steuerscheibe (4) aufliegt.

7. Rotationsdämpfer nach einem der voranstehenden Ansprüche, **dadurch gekennzeichnet, dass** die Steuerflächen (6, 7) durch zueinander korrespondierende und ineinandergreifende Gewindeflanken (18,19) gebildet sind.

8. Rotationsdämpfer nach Anspruch 7, **dadurch gekennzeichnet, dass** der Außenumfang der Steuerscheibe (4) als Außengewinde ausgebildet ist, insbesondere als mehrgängiges Steilgewinde.

9. Rotationsdämpfer nach einem der voranstehenden Ansprüche, **dadurch gekennzeichnet, dass** das Steuerglied (3) als ringförmige Hülse ausgebildet ist, welche die Steuerscheibe zumindest abschnittsweise umgreift.

10. Rotationsdämpfer nach Anspruch 9, **dadurch gekennzeichnet, dass** der Innenumfang des ringförmigen Steuerglieds (3) als Innengewinde, insbesondere als mehrgängiges Steilgewinde, ausgebildet ist.

11. Rotationsdämpfer nach einem der voranstehenden Ansprüche, **dadurch gekennzeichnet, dass** das Steuerglied (3) im Gehäuse (1) durch Lagerelemente (20,21) in axialer Richtung fixiert und gegenüber dem Gehäuse (1) drehbar gelagert ist.

12. Rotationsdämpfer nach Anspruch 9 oder 10, **dadurch gekennzeichnet, dass** das ringförmige Steuerglied (3) über einen an seinem Außenumfang umlaufenden Steg (20), welcher in eine am Innenumfang des Gehäuses (1) umlaufende Ringnut (21) eingreift, drehbar im Gehäuse (1) gelagert ist.

13. Rotationsdämpfer nach einem der voranstehenden Ansprüche, **dadurch gekennzeichnet, dass** die Steuerflächen (6, 7) durch zueinander korrespondierende Gewindeflanken (18, 19) eines Steilgewindes und/oder eines mehrgängigen Gewindes gebildet sind.

14. Rotationsdämpfer nach einem der voranstehenden Ansprüche, **dadurch gekennzeichnet, dass** sich bei einer Drehung des Rotors (2) in der ersten Rotationsrichtung das Steuerglied (3) und die Steuerscheibe (4) in axialer Richtung durch gleitendes Verschieben entlang der Steuerflächen (6, 7) voneinander entfernen, wodurch das oder jedes Bremselement in axialer Richtung gegen die Innenfläche (13a; 14a) des Gehäusebodens (13) oder/bzw. des Gehäusedeckels (14) gepresst wird und dass sich bei einer Drehung des Rotors (2) in der entgegengesetzten Rotationsrichtung das Steuerglied (3) und die Steuerscheibe (4) in axialer Richtung durch gleitendes Verschieben entlang der Steuerflächen (6, 7) einander annähern, wodurch das oder jedes Bremselement außer Eingriff mit dem Gehäuseboden (13) bzw. dem Gehäusedeckels (14) gebracht wird.
